# EUROPEAN PATENT SPECIFICATION

(11) **EP 3 327 263 B1**
(45) Date of publication and mention of the grant of the patent: **30.12.2020**
(21) Application number: 17201847.5
(22) Date of filing: 15.11.2017
(51) Int. Cl.: F01N 3/10, B01F 5/00, F01N 3/28, F01N 3/20, F01N 3/021, B01F 3/04, B01F 5/02, B01F 5/06, B01F 5/04, F01N 13/00

(54) **APPARATUS FOR AFTERTREATMENT OF EXHAUST GAS COMPRISING INLINE HOUSING**
VERFAHREN, VORRICHTUNG UND SYSTEM ZUR NACHBEHANDLUNG VON ABGAS MIT INLINE-GEHÄUSE
PROCÉDÉ, APPAREIL ET SYSTÈME DE POST-TRAITEMENT DE GAZ D'ÉCHAPPEMENT COMPRENANT UN BOÎTIER EN LIGNE

(30) Priority: 23.11.2016 GB 201619790
(43) Date of publication of application: 30.05.2018
(73) Proprietor: Proventia Oy, 90460 Oulunsalo (FI)
(72) Inventor: TYNI, Tuomas, 91900 Liminka (FI); HALONEN, Sauli, 90230 Oulu (FI); KARHU, Juha, 90540 Oulu (FI)
(74) Representative: Espatent Oy

(56) References cited:
- EP-A1- 2 840 241
- WO-A1-2016/118720
- DE-B3-102015 104 540
- US-A1- 2014 044 603
- US-A1- 2014 196 440

## Description

### TECHNICAL FIELD

The present application generally relates to a system, method and apparatus for aftertreatment of exhaust gas.

### BACKGROUND ART

Emission regulations for internal combustion engines have tightened over recent years, and the trend is even tightening. For example, regulated emissions of NOx and particles from internal combustion engines are becoming so low that the target emissions levels are hard to be met. Therefore, aftertreatment systems are used in engines to reduce emissions. For reducing NOx emissions, NOx reduction catalysts, including selective catalytic reduction (SCR) systems, are utilized to convert NOx (NO and NO2) to N2 and other compounds. SCR systems utilize a reactant, such as ammonia, to reduce the NOx.

Simultaneously with the emission regulation demands, also power and efficiency demands for engines increase. On top of that the internal combustion engines should be designed and manufactured with smaller size, inline design and decreased weight, if possible.

Previous solutions have been presented in publications DE 10 2015 104540 B3 and WO2016/118720 A1.

A solution is needed for cost-efficiently providing an aftertreatment system of exhaust gas for internal combustion engine to reduce emissions capable of fulfilling the requirements for emission regulations without sacrificing too much power and efficiency of the engine and do all this in compact size with inline housing design.

### SUMMARY

According to the invention there is provided an apparatus for aftertreatment of exhaust gas according to appended claim 1 comprising:
a housing having a longitudinal axis that extends between a first end and a second end of the housing;
an exhaust inlet being positioned at a portion of the first end of the housing for entering exhaust gas flow into the interior of the housing;
mixer arrangement being positioned within the interior of the housing downstream to the exhaust inlet and comprising:
   first flow guide arrangement configured to guide the exhaust gas flow to rotating and advancing gas flow in direction of a crosswise axis perpendicular to the longitudinal axis;
   a reactant inlet for dispensing reactant to the rotating and advancing gas flow, the reactant configured to mix with the exhaust gas; and
   second flow guide arrangement configured to guide the rotating and advancing mixed gas flow in direction of the longitudinal axis as a mixed exhaust gas flow; and
a substrate being positioned within the interior of the housing downstream to the mixer arrangement, wherein the mixed exhaust gas flow being configured to flow through the substrate, wherein
the reactant inlet is configured to dispense reactant in second direction of a crosswise axis perpendicular to the longitudinal axis, the second direction being opposite to the first direction.

In an embodiment, the exhaust inlet being positioned at an end portion of the first housing end, the inlet having a central axis parallel to the longitudinal axis of the housing.
In an embodiment, the exhaust gas flow being configured to flow in direction of the longitudinal axis between the exhaust inlet and the mixer arrangement and through the substrate.

In an embodiment, a first substrate is positioned within the interior of the housing downstream to the exhaust inlet, wherein the exhaust gas flow being configured to flow through the first substrate in direction of the longitudinal axis, and the substrate comprises a second substrate positioned within the interior of the housing downstream to the mixer arrangement, wherein the mixed exhaust gas flow being configured to flow through the second substrate in direction of the longitudinal axis.

In an embodiment, the first substrate comprises at least one of the following:
a diesel oxidation catalyst (DOC) substrate; and
a diesel particulate filter (DPF).

In an embodiment, the second substrate comprises at least one of the following:
a selective catalytic reduction (SCR) substrate; and
a diesel particulate filter (DPF).

In an embodiment, the apparatus further comprises flow distribution arrangement positioned within the interior of the housing downstream to the mixer arrangement and upstream to the second substrate, the flow distribution arrangement comprising:
a first flow distribution element extending across the mixed exhaust gas flow as an U-shape first plate configured to divide the mixed exhaust gas flow to two sub flows exiting the first flow distribution element from opposite ends of the U-shape first plate within the interior of the housing;
a second flow distribution element, downstream to the first flow distribution element, extending across the interior of the housing at least partially as a concave or a conical second plate, at least two openings defined by the second plate extending radially outwardly from a central portion of the second plate, the openings increase in size as extending radially away from the central portion of the second plate, wherein each sub flow is allowed to flow within the interior of the housing above upstream surface of the second plate, a tubular inner surface of the housing configured to divide each sub flow to two radial sub flows, wherein the further two sub flows advancing radially in opposite directions to meet and mix with corresponding two radial sub flows originating from another sub flow and to enter the openings towards the second substrate as a distributed gas flow in direction of the longitudinal axis.

In an embodiment, the first flow guide arrangement comprises:
at least one elongated blade extending across a first part of the interior of the housing to guide the exhaust gas flow in direction of the longitudinal axis to a second part of the interior of the housing, the first part located above the second part;
at least one curved blade located in the second part of the interior of the housing to guide the exhaust gas flow to rotating and advancing movement in direction of a crosswise axis perpendicular to the longitudinal axis; and
a second surface of a block blade facing the second part of the interior of the housing preventing the rotating and advancing exhaust gas flow to access the first part of the interior of the housing;
a non-perforated tubular element allowing the rotating and advancing exhaust gas flow to enter a second open end of an interior of the non-perforated tubular element in the first direction of a crosswise axis perpendicular to the longitudinal axis;
the second flow guide arrangement comprising:
   a cup-shaped cylindrical element, wherein an inner diameter of the cup-shaped cylindrical element is greater than an outer diameter of a first open end of the non-perforated tubular element, wherein side wall of the cup-shaped cylindrical element extends to direction of a crosswise axis and overlaps a portion of side wall of the non-perforated tubular element; and
   a first surface of the block blade facing the cup-shaped cylindrical element and guiding the exhaust gas flow to direction of the longitudinal axis; and
   the reactant inlet arranged to a closed base of the cup-shaped cylindrical element and configured to dispense a reactant into the interior of the cup-shaped cylindrical element in second direction opposite to the first direction of the crosswise axis towards the first open end of the non-perforated tubular element.

In an embodiment, the first flow guide arrangement comprises:
at least one elongated blade extending across a first part of the interior of the housing to guide the exhaust gas flow in direction of the longitudinal axis to a second part of the interior of the housing, the first part located above the second part;
at least one curved blade located in the second part of the interior of the housing to guide the exhaust gas flow to rotating and advancing movement in direction of a crosswise axis perpendicular to the longitudinal axis; and
a second surface of a block blade facing the second part of the interior of the housing preventing the rotating and advancing exhaust gas flow to access the first part of the interior of the housing;
a tubular element arranged in direction of cross-axis allowing the rotating and advancing exhaust gas flow to enter an interior of the perforated tubular through openings located within a second portion of the tubular element exposed to the second part of the interior of the housing, whereas a first portion of the tubular element exposed to the first part of the interior of the housing is non-perforated;
the second flow guide arrangement comprising:
   a cup-shaped cylindrical element, wherein an inner diameter of the cup-shaped cylindrical element is greater than an outer diameter of an open end of the first portion of the tubular element, wherein side wall of the cup-shaped cylindrical element extends to direction of a crosswise axis and overlapping a portion of side wall of the first portion of the tubular element; and
   a first surface of the block blade facing the cup-shaped cylindrical element and guiding the exhaust gas flow to direction of the longitudinal axis; and
the reactant inlet is arranged to a closed base of the cup-shaped cylindrical element and configured to dispense a reactant into the interior of the cup-shaped cylindrical element in second direction opposite to the first direction of the crosswise axis towards the open end of the tubular element.

In an embodiment, a peripheral surface of the tubular element comprises openings and fins corresponding to the openings to guide exhaust gas flow to flow through the openings into the tubular element.

In an embodiment, the first flow guide arrangement further comprises an elongated pole member extending in direction of a crosswise axis and located in the second part of the interior of the housing, outer diameter of the elongated cylindrical pole member being smaller than inner diameter of the non-perforated tubular element, a first end of the elongated pole member extending partially inside the non-perforated tubular element and a second end of the elongated pole member attached to an internal surface of the housing within the second part of the interior of the housing.

In an embodiment, the elongated pole member is cylindrical.

In an embodiment, the elongated pole member comprises a conical first end.

In an embodiment, the elongated pole member is a perforated tubular element. The perforated tubular element may be conical.

In an embodiment, the first flow guide arrangement further comprises an elongated pole member extending in direction of a crosswise axis and located in the second part of the interior of the housing, outer diameter of the elongated cylindrical pole member being smaller than inner diameter of the non-perforated tubular element, a first end of the elongated pole member not extending inside the non-perforated tubular element and a second end of the elongated pole member attached to an internal surface of the housing within the second part of the interior of the housing.

According to a second example aspect of the invention there is provided a combustion engine comprising an apparatus for aftertreatment of exhaust gas of the first aspect.

Different non-binding example aspects and embodiments of the present invention have been illustrated in the foregoing. The above embodiments are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

The invention will be described, by way of example only, with reference to the accompanying drawings, in which:
Fig. 1 shows a schematic picture of a system according to an example embodiment of the invention;
Figs. 2a-b show schematic pictures of an example apparatus;
Figs. 3a-c show schematic pictures of an apparatus according to second example embodiment of the invention;
Figs. 4a-e show schematic pictures of an apparatus according to third example embodiments of the invention;
Figs. 5a-b show schematic pictures of an example apparatus;
Figs. 6a-d show schematic pictures of an example apparatus;
Fig. 7 shows a schematic picture of an apparatus according to fourth example embodiment of the invention;
Fig. 8 shows a schematic picture of an apparatus according to fifth example embodiment of the invention; and
Fig. 9 shows another schematic picture of an example apparatus.

### DETAILED DESCRIPTION

In the following description, like numbers denote like elements.

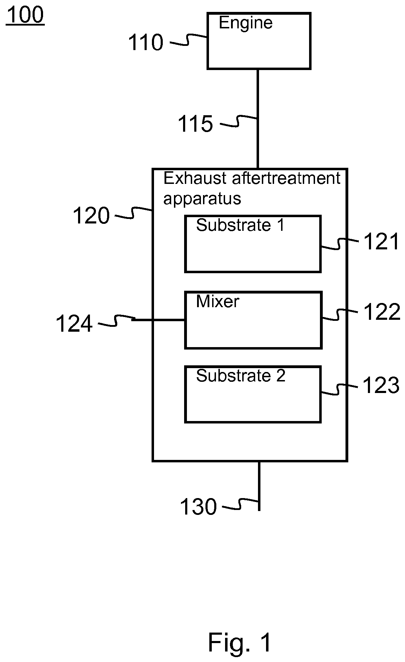

Fig. 1 shows a schematic picture of a system according to an example embodiment of the invention. An engine system 100 is shown. The engine system 100 comprises an engine 110 and an exhaust aftertreatment apparatus 120. Furthermore, the system 100 may comprise other devices that are not shown in the Fig. 1. Such devices comprise, for example, a fuel storage for the engine 110 (e.g. diesel), and an air intake device including an air filter.

Fig. 1 shows a connection 115 between the engine 110 and the exhaust aftertreatment apparatus 120. The connection 115 may comprise a pipe for guiding exhaust gas from the engine 110, for example.

The exhaust aftertreatment apparatus 120 receives the exhaust gas from the engine 110 over the connection 115. In an embodiment, the apparatus 120 comprises a first substrate 121 (for example a catalytic converter, such as diesel oxidation catalyst (DOC) device and/or a filter, such as a diesel particulate filter (DPF), a mixer 122 and a second substrate 123 (for example a selective catalytic reduction (SCR) device). The devices 121-123 are in an embodiment implemented within the same housing of the apparatus 120 but at least one of the devices 121, 123 may also be placed outside the housing of the apparatus 120. A connection 124 for receiving reactant for the mixer 122 is also disclosed. The apparatus 120 may further comprise devices not shown in Fig. 1, such as doser for the reactant, a storage for the reactant (such as urea or ammonia), gas flow guides and connections within the apparatus 120.

First substrates 121, such as catalytic converters (diesel oxidation catalysts or DOC's) are typically used in an exhaust system to convert undesirable gases such as carbon monoxide and hydrocarbons from engine's exhaust into carbon dioxide and water. DOC's may have different configurations. The substrates used in catalytic converters preferably include a catalyst.

Another first substrates 121, such as a diesel particulate filter (DPF) may also be implemented together or alternatively to the DOC in an exhaust system to remove particulate matter (e.g., carbon based particulate matter such as soot) from the exhaust. DPF's can have a variety of known configurations.

The second substrate 123, such as the selective catalytic reduction (SCR) catalyst device is typically used in an exhaust system to remove undesirable gases such as nitrogen oxides (NOx) from the engine's emissions. SCR's are capable of converting NOx to nitrogen and oxygen in an oxygen rich environment with the assistance of reactants such as urea or ammonia, which are injected into the exhaust gas upstream of the SCR device 123.

A mixer 122 is configured to receive exhaust gas from the engine 110 over connection 115, which gas is possibly run through a first substrate 121, such as DOC or DPF, as disclosed above. The mixer 122 receives also reactant, such as diesel exhaust fluid (DEF), over the connection 124, the reactant commonly referred to as AdBlue™ that is an aqueous urea solution made with 32.5% high-purity urea and 67.5% deionized water. DEF may be used as a consumable in selective catalytic reduction (SCR) in order to lower NOx concentration in the diesel exhaust emissions from diesel engines. The mixer 122 is configured to mix the exhaust gas and the reactant and also to reduce urea deposits in exhaust pipelines. When SCR process uses DEF, it can cause urea deposits in exhaust pipes, especially in off-road applications using airless DEF injectors. Larger DEF spray droplets might lead to wall wetting and film formation on exhaust pipe inner surfaces, causing deposits when the local temperatures are low. Urea deposit problems have become frequent and critical, and the mixer 122 is configured to keep pipelines clean by evenly distributing the reactant to the exhaust gas in the shortest possible pipe length and avoiding this way the wall wetting and film formation.

The apparatus 120 may also help water evaporation from DEF and ensures optimal reactions with the reactant with no unwanted side effects. The apparatus 120 may be used with all reactant dosers (e.g. urea or ammonia) to achieve even NH3 distribution within the exhaust gas. Further benefit is experienced with airless injectors, which have rather large Sauter mean diameter (SMD) and when the injection must start at low temperatures. An exhaust gas outlet pipe 130 guides the aftertreated exhaust gas from the apparatus 120.

In an embodiment, the apparatus 120 is configured to inject small droplets of reactant, such as urea-water solution, to the exhaust gas flow and causing the reactant to vaporize in an exhaust gas flow channel defined by interior of the housing of the apparatus housing and to react with the nitric oxides of the exhaust gas and changing them to plain nitrogen. Such final change to nitrogen takes place in SCR catalysator of the second substrate 123.

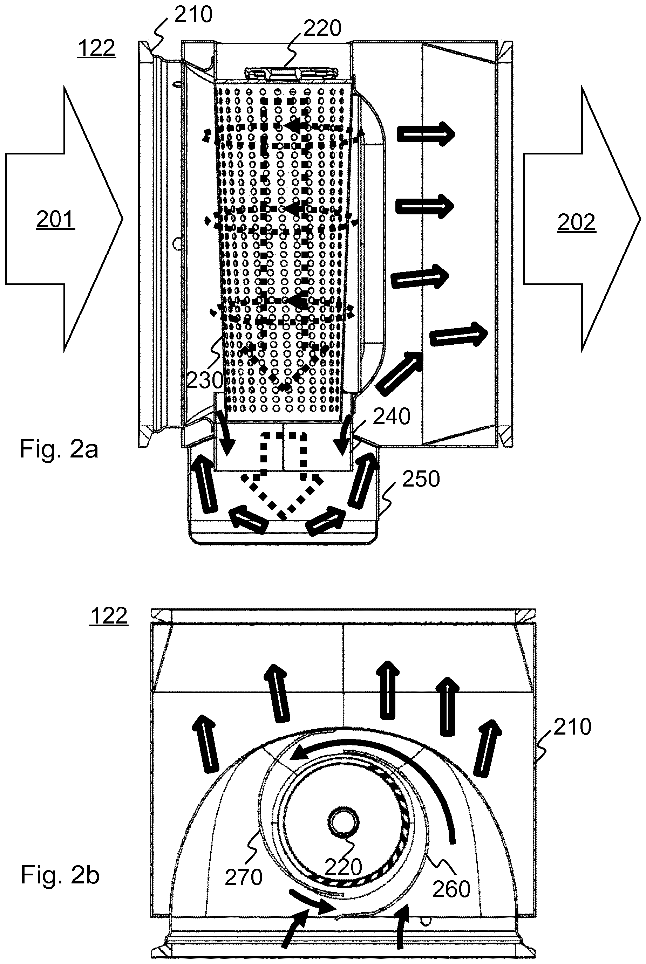

Figs. 2a-b show schematic pictures of an example mixer arrangement 122. Fig. 2a shows a view from side, wherein exhaust gas flow 201 enters and mixed exhaust gas flow 202 exits in direction of longitudinal axis (from left to right in Fig. 2a). Fig. 2b shows a view from above, wherein exhaust gas flow enters and mixed exhaust gas flow (flow arrows 201, 202 not shown) exits in direction of longitudinal axis (from down to up in Fig. 2b).

The mixer arrangement 122 for aftertreatment of exhaust gas comprises a housing 210, an exhaust inlet for incoming exhaust gas flow 201, a reactant inlet 220, and an exhaust outlet for outgoing mixed exhaust gas flow 202.

In an example, the reactant inlet 220 comprises a nozzle.

The exhaust inlet is arranged to the housing 210 for entering input exhaust gas flow 201 to the mixer arrangement 122. The reactant inlet 220 is arranged to the housing 210 for dispensing reactant to the mixer arrangement 122, and the reactant is configured to mix with the input exhaust gas flow to provide mixed exhaust gas flow. The exhaust outlet is arranged to the housing 210 for exiting mixed exhaust gas flow from the mixer arrangement 122. Furthermore, the mixer arrangement 122 may comprise, for example, attachment elements for attaching the mixer arrangement 122 to an engine system or a chassis of a vehicle. The exhaust outlet may comprise an outlet duct.

In an example, an apparatus 120 for aftertreatment of exhaust gas comprises a housing 210 having a longitudinal axis that extends between a first end and a second end of the housing; an exhaust inlet being positioned at a portion of the first end of the housing 210 for entering exhaust gas flow 201 into the interior of the housing 210; a first substrate (not shown) being positioned within the interior of the housing downstream to the exhaust inlet, wherein the exhaust gas flow being configured to flow through the first substrate in direction of the longitudinal axis. A mixer arrangement 122 is positioned within the interior of the housing 210 downstream to the first substrate and comprises first flow guide arrangement 230-240, 260-270 configured to guide the exhaust gas flow 201 in direction of the longitudinal axis to rotating and advancing gas flow in direction of a crosswise axis perpendicular to the longitudinal axis; a reactant inlet 220 for dispensing reactant to the rotating and advancing gas flow, the reactant configured to mix with the exhaust gas; and second flow guide arrangement 250 configured to guide the rotating and advancing mixed gas flow in direction of the longitudinal axis as a mixed exhaust gas flow 202; and a second substrate (not shown) being positioned within the interior of the housing 210 downstream to the mixer arrangement 122, wherein the mixed exhaust gas flow 202 is configured to flow through the second substrate in direction of the longitudinal axis.

In an example, the first flow guide arrangement first flow guide arrangement 230-240, 260-270 comprises at least one elongated blade 260, 270 extending across at least a portion of the interior of the housing; a perforated tubular element 230, wherein at least part of the exhaust gas is configured to enter an interior of the perforated tubular element 230 through apertures, and the perforated tubular element 230 being configured to guide the exhaust gas to rotating and advancing movement (see arrows within and around the perforated tubular element 230) in direction of a crosswise axis perpendicular to the longitudinal axis, wherein a center flow advances inside the perforated tubular element in direction of the crosswise axis and the edge flow rotates and advances around the perforated tubular element 230 in direction of the crosswise axis, and the perforated tubular element 230 is conical.
The reactant inlet 220 is configured to dispense a reactant into the interior of the perforated tubular element 230 in direction of the crosswise axis from a first end (upper end in Fig. 2a) of the perforated tubular element 230 towards a second end (lower end in Fig. 2a) of the perforated tubular element 230; and the second flow guide 250 comprising a cup-shaped cylindrical element extending in direction of the crosswise axis outside an external surface of the housing 210 and enhancing interior of the housing, wherein an inner diameter of the cup-shaped cylindrical element is greater than an outer diameter of the second end of the perforated tubular element 230.

In an example, a non-perforated tubular element 240 is arranged downstream to the perforated tubular element 230 and upstream to the cup-shaped cylindrical element 250, configured to guide at least part of the flow in direction of the crosswise axis towards the cup-shaped cylindrical element 250, a diameter of the non-perforated tubular element 240 being greater than a diameter of a second end of the perforated tubular element 230 and allowing a part of the rotating and advancing edge flow around the perforated tubular element 230 (see arrows through gap between elements 230-240) to enter the non-perforated tubular element 240. The cup-shaped cylindrical element 250 comprises a circular open end (upper end in Fig. 2a), the diameter of the circular open end being greater than a diameter of a second (lower) end of a non-perforated tubular element 240 enabling the mixed gas flow to flow around the non-perforated tubular element 240 towards a closed end (lower) of the cup-shaped cylindrical element 250 and to turn the mixed gas flow to flow through a gap between the inner surface of the circular open end of the cup-shaped cylindrical element 250 and the outer surface of the non-perforated tubular element 240 towards outlet to flow as mixed gas flow 202 in direction of the longitudinal axis.

In an example, the mixer arrangement 122 comprises a first curved flow guide 260 and a second curved flow guide 270 extending at least across a portion of the exhaust inlet within an interior of the housing 210 for steering the entering exhaust gas flow in the interior to form a first flow path and a second flow path from the exhaust inlet circulating a perforated tubular element 230. An exhaust gas flow 201 is entering interior of the housing 210 of the mixer arrangement 122. A portion of the entering gas flow 201 enters a first flow path, wherein the first flow path comprises a first part between an outer wall of the first curved flow guide 260 and an inner wall of the housing 210; a second part between the inner wall of the housing and the perforated tubular element 230; and a third part between an inner wall of the second curved flow guide 270 and the perforated tubular element 230. A portion of the entering gas flow 201 enters a second flow path, wherein the second flow path comprises a first part between an outer wall of the second curved flow guide 270 and an inner wall of the first curved flow guide 260; a second part between the inner wall of the first curved flow guide 260 and the perforated tubular element 230; a third part between the inner wall of the housing 210 and the perforated tubular element 230; and a fourth part between an inner wall of the second curved flow guide 270 and the perforated tubular element 230.

In an example, the first curved flow guide 260 extends from the exhaust inlet in the interior of the housing to a first direction around the perforated tubular element 230; and the second curved flow guide 270 extends from the exhaust inlet in the interior of the housing to a second direction around the perforated tubular element, as shown in Fig. 2b. Upstream ends of the first curved flow guide and the second curved flow guide that are adjacent to the exhaust inlet (lower open end in Fig. 2b) are at least partially overlapping with each other to provide a gap between the curved flow guides for the first part of the second flow path.
In an embodiment, the curved flow guides 260-270 may be of different lengths and curvatures. There may also be more than two curved flow guides installed.
In an embodiment, directions of a first flow path and a second flow path may be defined by arranging the flow guides 260-270 appropriately to direct the flows in desired direction around the perforated tubular element 230.

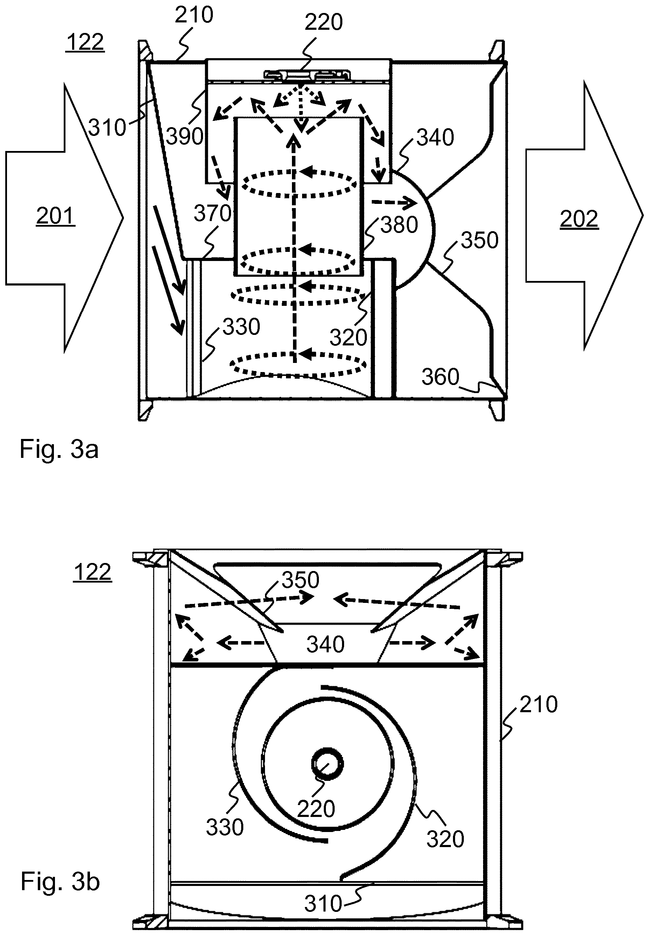

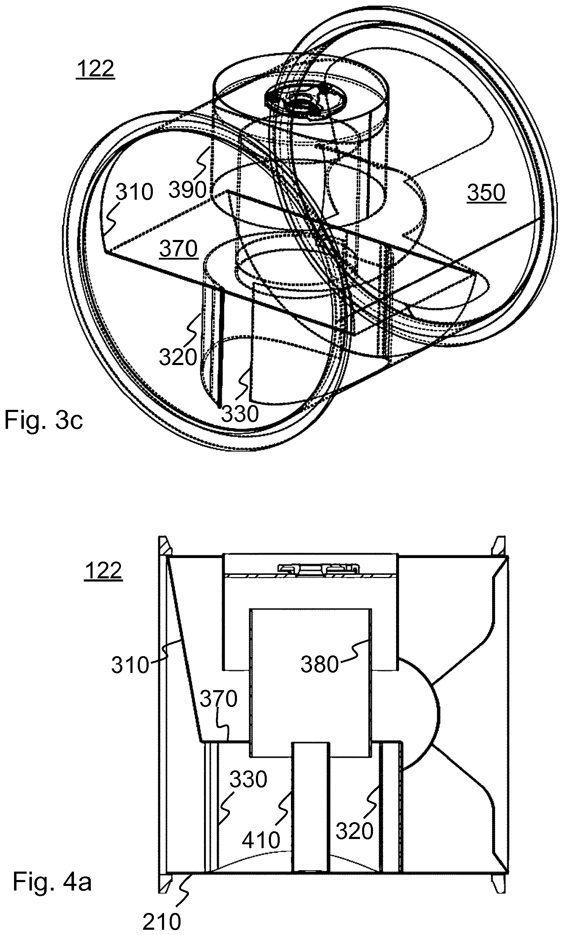

Figs. 3a-c show schematic pictures of a mixer arrangement 122 according to second example embodiments of the invention.
In an embodiment, a first flow guide arrangement 310-330, 370-380 comprises at least one elongated blade 310 extending across a first part of the interior of the housing to guide the exhaust gas flow 201 in direction of the longitudinal axis to a second part of the interior of the housing, the first part located above the second part (parts separated by blocking plate 370). The first part corresponds in Fig. 3a to the upper interior of the housing above the blade 310 and the plate 370, whereas the second part corresponds to the lower interior of the housing below the blade 310 and the plate 370. At least one curved blade 320, 330 is located in the second part of the interior of the housing to guide the exhaust gas flow to rotating and advancing movement in direction of a crosswise axis perpendicular to the longitudinal axis. A second surface (lower surface in Fig. 3a) of a block blade 370 facing the second part of the interior of the housing prevents the rotating and advancing exhaust gas flow to access the first part of the interior of the housing outside a non-perforated tubular element 380. The non-perforated tubular element 380 allows the rotating and advancing exhaust gas flow to enter via a second (lower) open end of the non-perforated tubular element 380 to the first direction (upwards) of a crosswise axis perpendicular to the longitudinal axis. The second flow guide arrangement 370, 390 comprises a cylindrical element 390, wherein an inner diameter of the cylindrical element 390 is greater than an outer diameter of a first open end (upper) of the non-perforated tubular element 380, wherein side wall of the cylindrical element 390 extends to direction (down) of a crosswise axis and overlapping a portion of side wall of the (upper end) non-perforated tubular element 380. A first surface (upper) of the block blade 370 faces the cylindrical element 390, connects to the outer surface of the (lower end) non-perforated tubular element 380 and guides the exhaust gas flow to direction of the longitudinal axis.

The reactant inlet 220 is arranged to a closed base (upper end) of the cup-shape cylindrical element 390 and is configured to dispense a reactant into the interior of the cup-shape cylindrical element 390 in second direction (downwards) opposite to the first direction of the crosswise axis, towards the first open end (and gas flow advancing upwards) of the non-perforated tubular element 380.

In an embodiment, the reactant is dispensed from the reactant inlet 220 against the rotating and advancing exhaust gas flow into the center part of the rotating and advancing exhaust gas flow flowing through the non-perforated tubular element 380. Narrow-beam reactant inlet 220 may be configured to direct bigger droplets to travel further down the dispensing axis, whereas smaller droplets are mixed and carried away earlier by the rotating and advancing exhaust gas flow. By dispensing the reactant droplets upstream against the rotating and advancing exhaust gas flow, droplets travel first upstream (against flow) and then downstream (with flow) and thus a longer channel distance for evaporation of droplets is achieved. Furthermore, the rotating and advancing exhaust gas flow may direct the droplets out of the center dispensing axis and prevent the droplets to hit the reactant inlet 220 when carried away to downstream direction. Within the center part of the rotating and advancing exhaust gas flow, the flow direction may change so that the center flow part close to the reactant inlet moves away from the reactant inlet 220.

In an embodiment, the mixer arrangement 122 of the apparatus 120 may further comprise flow distribution arrangement 340-360 positioned within the interior of the housing 210 downstream to the reactant inlet 220 and upstream to the second substrate (not shown). The flow distribution arrangement 340-360 comprises a first flow distribution element 340 extending across the mixed exhaust gas flow (longitudinal) as an U-shape first plate configured to divide the mixed exhaust gas flow to two sub flows exiting the first flow distribution element 340 from opposite ends (left and right in Fig. 3b) of the U-shape first plate within the interior of the housing 210. A second flow distribution element 350, downstream to the first flow distribution element 340, extends across the interior of the housing 210 at least partially as a concave or a conical second plate, and at least two openings are defined by the second plate extending radially outwardly from a central portion of the second plate, wherein the openings increase in size as extending radially away from the central portion of the second plate 350, wherein each sub flow is allowed to flow within the interior of the housing 210 above upstream surface (lower surface in Fig. 3b) of the second plate 350. A tubular inner surface of the housing 210 is configured to divide each sub flow to two radial sub flows, wherein the two radial sub flows advance radially in opposite directions to meet and mix with corresponding two radial sub flows originating from another sub flow and to enter the openings towards the second substrate as a distributed exhaust gas flow in direction of the longitudinal axis. The second flow distribution element 350 may comprise a collar 360 that prevents distributed exhaust gas flow to directly enter towards the second substrate via the radial edge portion of the interior of the housing 210.

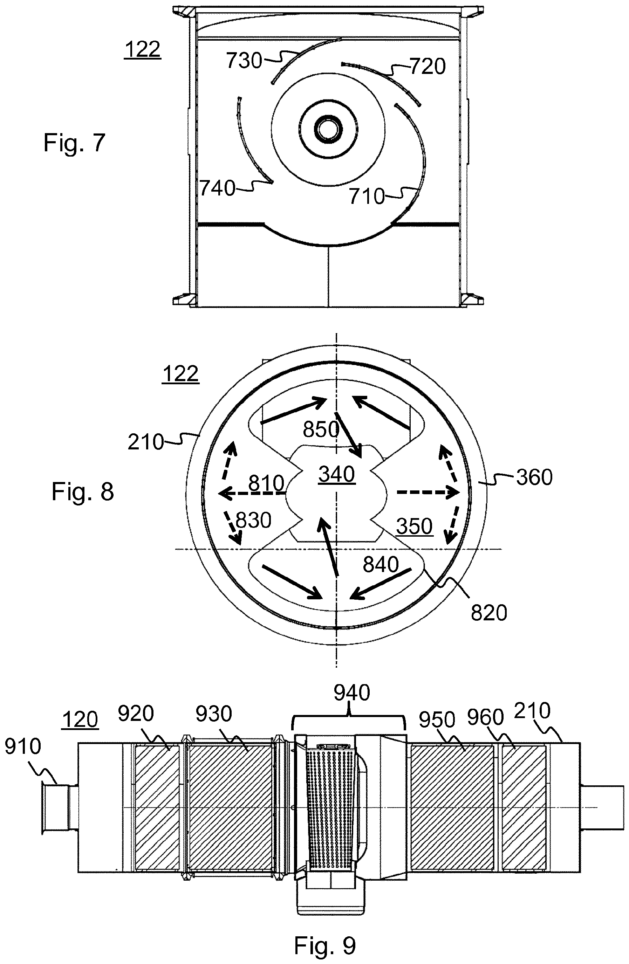

No matter the flow distribution arrangement 340-360 is shown in Figs. 3a-b, the mixer arrangement 122 may also be implemented without the arrangement 340-360. The flow distribution arrangement 340-360 is further illustrated in Fig. 8.

In an embodiment (not shown in Fig. 3a), the non-perforated tubular element 380 of Fig. 3a may extend lower to the second part of the interior of the housing (even to bottom inner surface of the housing 210). The first flow guide arrangement comprises at least one elongated blade 310 extending across a first part (upper) of the interior of the housing to guide the exhaust gas flow in direction of the longitudinal axis to a second part (lower) of the interior of the housing, the first part is located above the second part. At least one curved blade 320, 330 is located in the second part of the interior of the housing to guide the exhaust gas flow to rotating and advancing movement in direction of a crosswise axis perpendicular to the longitudinal axis; and a second surface of a block blade 370 faces the second part of the interior of the housing preventing the rotating and advancing exhaust gas flow to access the first part of the interior of the housing. A tubular element 380 is arranged in direction of cross-axis allowing the rotating and advancing exhaust gas flow to enter an interior of the tubular element 380 through openings located within a second portion (lower) of the tubular element 380 exposed to the second part of the interior of the housing, whereas a first portion of the tubular element exposed to the first part of the interior of the housing is non-perforated. The second flow guide arrangement comprises a cylindrical element 390, wherein an inner diameter of the cylindrical element 390 is greater than an outer diameter of an open end of the first portion of the tubular element 380, wherein side wall of the cylindrical element 390 extends to direction of a crosswise axis and overlapping a portion of side wall of the first portion of the tubular element 380. A first surface (upper surface) of the block blade 370 faces and connects with the cylindrical element 380 and guides the exhaust gas flow to direction of the longitudinal axis. The reactant inlet 220 is arranged to a closed base of the cup-shape cylindrical element 390 and configured to dispense a reactant into the interior of the cup-shape cylindrical element 390 in second direction opposite to the first direction of the crosswise axis towards the open end of the tubular element 380.

In an embodiment (not shown in Fig. 3a), a peripheral surface of the tubular element 380 (extending lower to second part, even to bottom inner surface of the housing 210) comprises openings and fins corresponding to the openings to guide exhaust gas flow to flow through the openings into the tubular element.

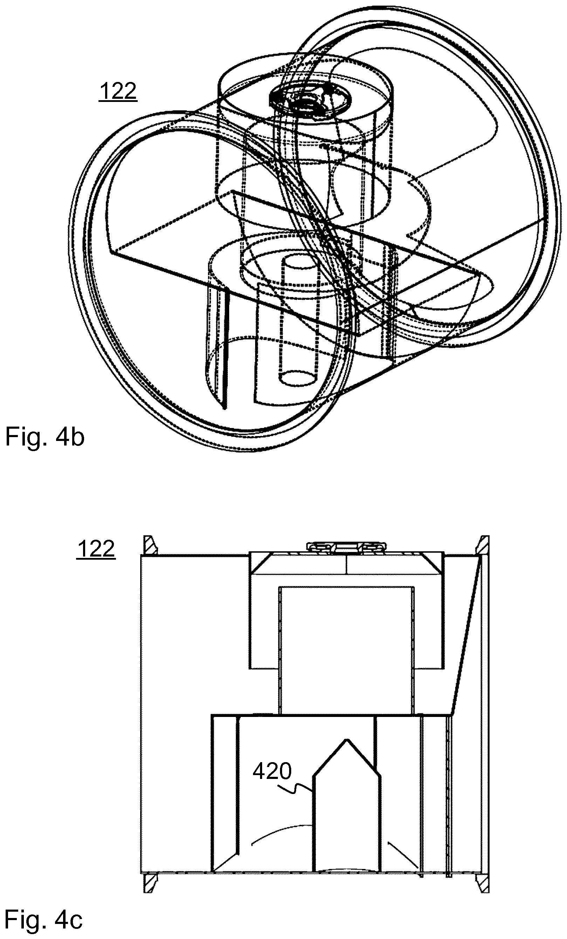

Figs. 4a-e show schematic pictures of an apparatus according to third example embodiments of the invention.

In an embodiment, the first flow guide arrangement 310-330, 370-380 further comprises an elongated pole member 410 extending in direction of a crosswise axis and located in the second part of the interior of the housing, outer diameter of the elongated pole member 410 being smaller than inner diameter of the non-perforated tubular element 380. A first end (upper end) of the elongated pole member 410 extends partially inside the non-perforated tubular element 380 and a second end (lower end) of the elongated pole member 410 is attached to an internal surface of the housing 210 within the second part of the interior of the housing.

In an embodiment, the elongated pole member 410 is cylindrical.

In an embodiment, the first flow guide arrangement further comprises an elongated pole member 420, as illustrated in Fig. 4c, extending in direction of a crosswise axis (upwards) and located in the second part of the interior of the housing, and the outer diameter of the elongated cylindrical pole member 420 is smaller than inner diameter of the non-perforated tubular element, a first end of the elongated pole member 420 does not extend inside the non-perforated tubular element and a second end of the elongated pole member 420 is attached to an internal surface of the housing within the second part of the interior of the housing.

In an embodiment, the elongated pole member 420 comprises a conical first end, as illustrated in Fig. 4c.

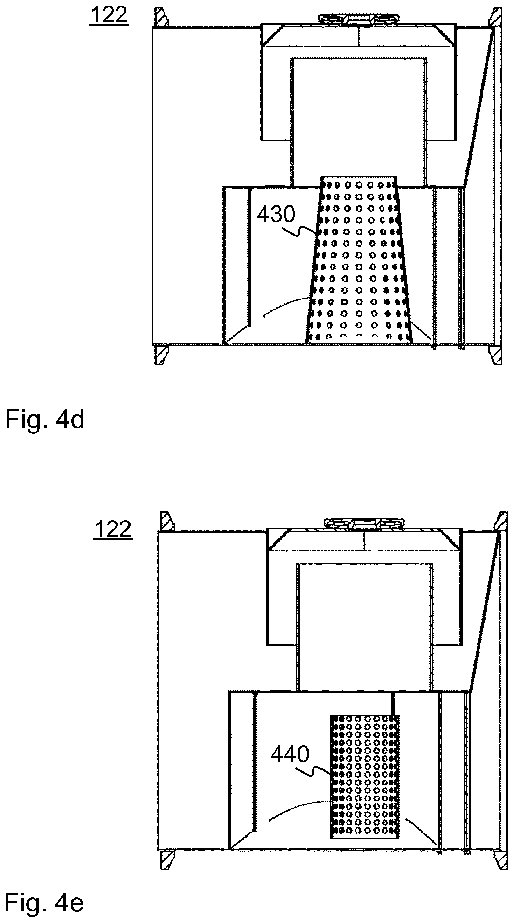

In an embodiment, the elongated pole member 430 is a conical perforated tubular element, as illustrated in Fig. 4d.

In an embodiment, the elongated pole member 440 is a perforated tubular element, as illustrated in Fig. 4e.

Elongated pole members 410-440 enable to improve the gas flow environment within the mixer arrangement 122 and improve the reactant mixing to the gas flow. More even gas flow and mixing may be achieved. Different sizes, shapes and perforations may be used for different types of mixers and/or engines.

In an embodiment, the elongated pole member 410-440 improves performance of the mixer arrangement 122 by generating smoother and more even rotating and advancing exhaust gas flow.

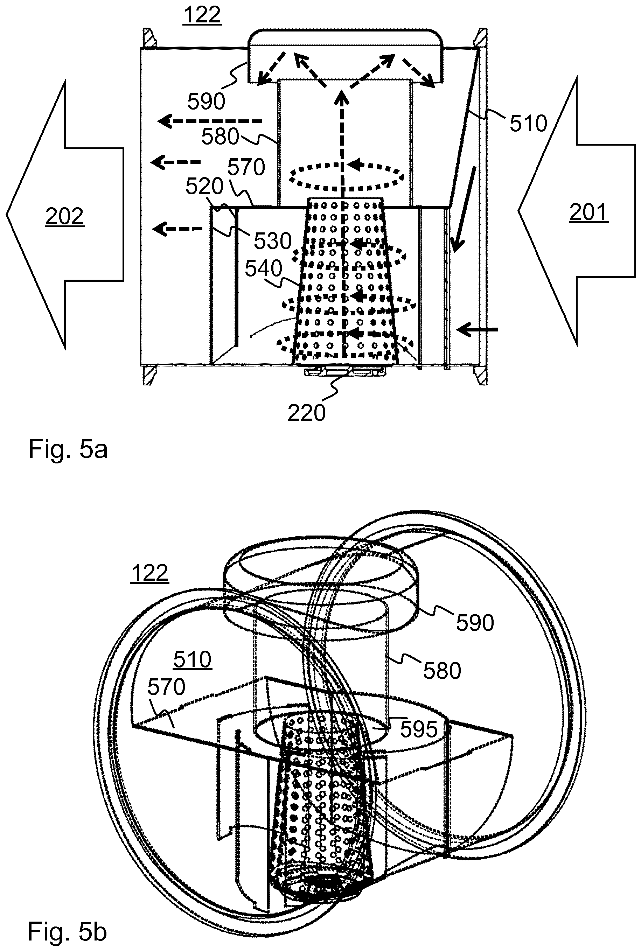

Figs. 5a-b show schematic pictures of an example apparatus.

The first flow guide arrangement comprises at least one elongated blade 510 extending across a first part (upper) of the interior of the housing to guide the exhaust gas flow 201 in direction of the longitudinal axis to a second part (lower) of the interior of the housing, the first part is located above the second part. The first flow guide arrangement further comprises at least one curved blade 520, 530 is located in the second part of the interior of the housing to guide the exhaust gas flow to rotating and advancing movement in direction (upwards) of a crosswise axis perpendicular to the longitudinal axis. The first flow guide arrangement further comprises a perforated tubular element 540, wherein at least part of the exhaust gas is configured to enter an interior of the perforated tubular element 540 through apertures, and the perforated tubular element 540 is configured to guide the exhaust gas flow to rotating and advancing movement in direction (upwards) of a crosswise axis perpendicular to the longitudinal axis, wherein a center flow advances inside the perforated tubular element 540 in the direction of the crosswise axis and the edge flow rotates and advances around the perforated tubular element 540 in direction of the crosswise axis, and the perforated tubular element 540 is conical. The first flow guide arrangement further comprises a non-perforated tubular element 580 allowing the rotating and advancing exhaust gas flow to enter a second open end (lower) of an interior of the non-perforated tubular element 580 in the first direction of a crosswise axis perpendicular to the longitudinal axis through a gap 595 between the non-perforated tubular element 580 and the perforated tubular element 540, wherein the inner diameter of the non-perforated tubular element 580 is bigger than the outer diameter (upper end) of the perforated tubular element 540. The first flow guide arrangement further comprises a second surface (lower) of a block blade 570 facing the second part of the interior of the housing preventing the rotating and advancing exhaust gas flow to access the first part of the interior of the housing outside the gap 595.

The reactant inlet 220 is configured to dispense a reactant into the interior of the perforated tubular element 540 in direction of the crosswise axis from a second end (lower) of the perforated tubular element 540 towards a first end (upper) of the perforated tubular element 540.

The second flow guide arrangement comprises a cup-shaped cylindrical element 590, wherein an inner diameter of the cylindrical element 590 is greater than an outer diameter of a downstream open end (upper) of the non-perforated tubular element 580, wherein side wall of the cup-shaped cylindrical element 590 extends to direction of a crosswise axis (downwards) and overlaps a portion of side wall of the non-perforated tubular element 580. The second flow guide arrangement further comprises a first surface (upper) of the block blade 570 that faces the cup-shaped cylindrical element 590 and connects to the non-perforated tubular element 580 and guides the mixed exhaust gas flow to direction of the longitudinal axis to enter as mixed exhaust gas flow 202 for the second substrate (not shown).

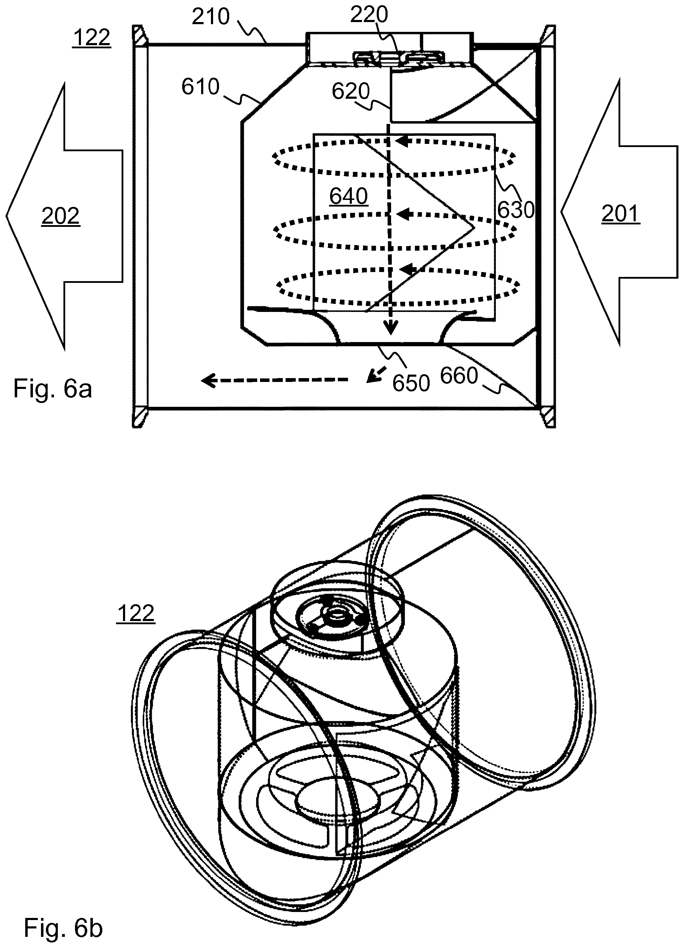

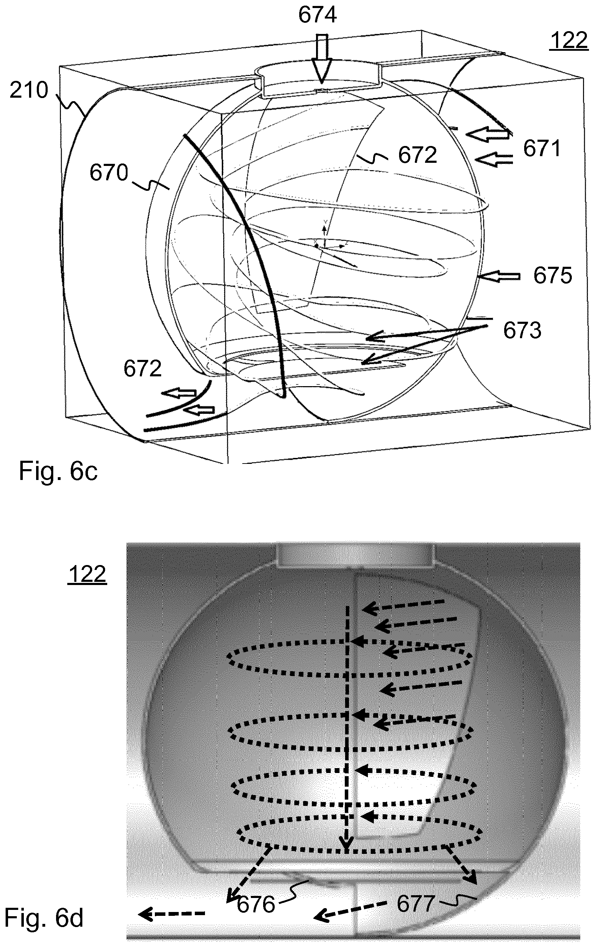

Figs. 6a-d show schematic pictures of an example apparatus.

The first flow guide arrangement comprises a mixing element 610, wherein the exhaust gas flow 201 is configured to enter an interior of the mixing element 610 through an inlet opening 620, 630 in a first part of the interior of the housing, the first part located above the second part, and the opening 620, 630 is at least partially located above a central longitudinal axis of the housing 210, and the mixing element 610 is configured to guide the exhaust gas flow to rotating and advancing movement in direction (downwards) of a crosswise axis perpendicular to the longitudinal axis inside the mixing element 610, and the mixing element 610 is cylindrical. The first flow guide arrangement may further comprise a flow guiding blade 640 to guide the exhaust gas flow 201 to enter an interior of the mixing element 610 through an inlet opening 620, 630.

The reactant inlet 220 is configured to dispense a reactant into the interior of the mixing element 610 in direction of the crosswise axis from a first end (up) of the mixing element 610 in the first part towards a second end (down) of the mixing element 610 in the second part.

The second flow guide arrangement comprises an outlet opening 650 in a second part of the interior of the housing, and the outlet opening 650 is located below a central longitudinal axis of the housing 210, and the outlet opening 650 being configured together with an inner surface (bottom) of the tubular housing 210 to guide the rotating and advancing mixed exhaust gas flow in direction of the longitudinal axis as a mixed exhaust gas flow. The second flow guide arrangement may further comprise a second flow guiding blade 660 to guide the mixed exhaust gas flow to direction of the longitudinal axis for entering as mixed exhaust gas flow 202 towards the second substrate (not shown).

In an embodiment, the mixing element 670 is spherical, as shown in Fig. 6c.

The first flow guide arrangement comprises a mixing element 670, wherein the exhaust gas flow 671 is configured to enter an interior of the mixing element 670 through an inlet opening 672 in a first part of the interior of the housing, the first part located above the second part, and the opening 672 is at least partially located above a longitudinal central axis of the tubular housing 210, and the mixing element 670 is configured to guide the exhaust gas flow 671 to rotating and advancing movement in direction of a crosswise axis perpendicular to the longitudinal axis inside the mixing element 670 guided by inner spherical surface 650 of the mixing element 670, and the mixing element 670 is spherical. The first flow guide arrangement may further comprise at least one flow limiting blade 673 to limit the mixed exhaust gas flow from freely exiting the mixing element 670.

The reactant inlet 674 is configured to dispense a reactant into the interior of the mixing element 670 in direction of the crosswise axis from a first end (up) of the spherical mixing element 670 in the first part (upper) towards a second end (down) of the mixing element 670 in the second part (lower).

The second flow guide arrangement comprises an outlet opening 672 in a second part (lower) of the interior of the housing, and the opening 672 is located below a longitudinal central axis of the tubular housing 210. The outlet opening 672 is configured together with an inner surface (bottom) of the housing 210 and inner surface portion 677 of the spherical mixing element 670 (portion 677 below at least one flow limiting blade 673) to guide the rotating and advancing mixed exhaust gas flow in direction of the longitudinal axis as a mixed exhaust gas flow. The second flow guide arrangement may further comprise a flow guiding blade 676 to guide the mixed exhaust gas flow to direction of the longitudinal axis for entering as mixed exhaust gas flow towards the second substrate (not shown).

Fig. 7 shows a schematic picture of an apparatus according to fourth example embodiment of the invention.

As shown in Figs.2a-b, 3a-b, 4a-e and 5a-b, there are systems comprising two curved flow guides 260-270, 320-330, and 520-530, for example. In an embodiment, the mixing arrangement 122 may comprise more than two curved flow guides 710-740, as shown in Fig. 7.

Fig. 8 shows a schematic picture of an apparatus according to fifth example embodiment of the invention.

In an embodiment, the apparatus 122 may further comprise flow distribution arrangement 340-360 positioned within the interior of the housing 210 downstream to the reactant inlet and upstream to the second substrate (not shown). The flow distribution arrangement 340-360 comprises a first flow distribution element 340 extending across the mixed exhaust gas flow as an U-shape first plate configured to divide the mixed exhaust gas flow to two sub flows 810 exiting the first flow distribution element 340 from opposite ends (left and right in Fig. 8) of the U-shape first plate within the interior of the housing 210. A second flow distribution element 350, downstream to the first flow distribution element 340, extends across the interior of the housing 210 at least partially as a concave or a conical second plate, and at least two openings 820 are defined by the second plate extending radially outwardly from a central portion of the second plate, wherein the openings 820 increase in size as extending radially away from the central portion of the second plate 350, wherein each sub flow 810 is allowed to flow within the interior of the housing 210 above upstream surface of the second plate 350. A tubular inner surface of the housing 210 is configured to divide each sub flow 810 to two radial sub flows 830, wherein the two radial sub flows 830 advance radially in opposite directions to meet and mix with corresponding radial sub flows 840 originating from another sub flow and to enter the openings 820 towards the second substrate as a distributed exhaust gas flow 850 in direction of the longitudinal axis (towards the viewer in Fig. 8). The second flow distribution element 350 may comprise a radial collar 360 that prevents distributed exhaust gas flow to directly enter towards the second substrate via the radial edge portion of the interior of the housing 210.

Fig. 9 shows another schematic picture of an example apparatus 120 for aftertreatment of exhaust gas.

The exhaust inlet 910 is positioned at an end portion of the first housing end, the inlet 910 having a central axis parallel to the longitudinal axis of the housing 210. The whole apparatus 120 may be arranged within tubular housing in view of a longitudinal axis.

In an example, the exhaust inlet 910 being positioned at a side portion of the first housing end, the inlet 910 having a central axis perpendicular to the longitudinal axis of the housing 210.

In an example, the first substrate 920, 930 comprises at least one of the following:
a diesel oxidation catalyst (DOC) substrate; and
a diesel particulate filter (DPF).

In an example, the second substrate comprises 950, 960 at least one of the following:
a selective catalytic reduction (SCR) substrate; and
a diesel particulate filter (DPF).

Downstream to the first substrate 920, 930 and upstream to the second substrate 950, 960 is arranged the mixer arrangement 940.

At least part of the exhaust gas flow may be directed to the different directions and the definition of opposite in such embodiments may be understood as essentially opposite, such as more than 135 degrees to opposite direction, for example. Furthermore, at least part of the exhaust gas flow may be directed to parallel directions and the definition of parallel in such embodiments may be understood as essentially parallel, such as less than 45 degrees to parallel direction, for example.

By guiding the exhaust gas flow first to flow in direction of the longitudinal axis, and then guide the exhaust gas flow to rotating and advancing gas flow in direction of a crosswise axis perpendicular to the longitudinal axis, dispense reactant to the rotating and advancing gas flow, the reactant configured to mix with the exhaust gas, and eventually to guide the rotating and advancing mixed gas flow to flow in direction of the longitudinal axis as a mixed exhaust gas flow, the time for the reactant to mix with the exhaust gas is increased and the housing is kept as inline tubular design. Furthermore the length of the apparatus may be reduced and thus ease the attachment to an engine system. Since the time for the reactant to mix with the exhaust gas is increased, and such operation is arranged with the first and the second flow guide arrangements and with the placement of the reactant inlet, hitting of the reactant to the inner surface of the housing interior may be reduced and vaporization of the reactant is improved.

With the help of a swirl structure of the mixer arrangement, the exhaust gas flow passed through the first substrate may be divided to a central flow flowing inside a tubular element and an edge flow surrounding the edge flow either within the tubular element and/or around the tubular element. These flows are little by little at least partially mixed and combined together within the apparatus before reaching the second substrate.

Some of the advantages and/or technical effects provided by embodiments of the invention comprise at least one of the following. First, a length of a mixing flow channel is increased without increasing the size of the apparatus too much. Second, the mixing flow channel diameter may be increased. Third, there is no dedicated reactant (e.g. ammonia or urea) concentration point within the interior of the housing or flow channel that would increase risk of urea deposits in exhaust pipelines. Fourth, turbulence of an exhaust gas flow within the mixer arrangement is reduced. Reducing the turbulence in the interior of the mixer arrangement results in that the center flow and the edge flow remain apart from each other in the beginning of a mixing procedure, whereby the reactive substance fed into the center flow does not come into contact with a wall of the housing too early before it is converted to ammonia, for example. Fifth, formation of solid deposit generated in the conversion process of urea (or some other reactant) is reduced within the interior of the housing and thus reduces the service need of the apparatus and the engine system. Furthermore, the engine system retains its operational ability and efficiency better. Sixth, when being able to design the apparatus as inline tubular housing design the placement and attachment of the apparatus to the engine system may be more freely designed. Since the deposit risk of the urea also in the bends of the housing is reduced, the designing of the aftertreatment apparatus becomes easier.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. An apparatus for aftertreatment of exhaust gas comprising:
a housing having a longitudinal axis that extends between a first end and a second end of the housing;
an exhaust inlet being positioned at a portion of the first end of the housing for entering exhaust gas flow into the interior of the housing;
a mixer arrangement being positioned within the interior of the housing downstream to the exhaust inlet and comprising:
a first flow guide arrangement configured to guide the exhaust gas flow to rotating and advancing gas flow in a first direction of a crosswise axis perpendicular to the longitudinal axis;
a reactant inlet for dispensing reactant to the rotating and advancing gas flow, the reactant configured to mix with the exhaust gas; and
a second flow guide arrangement configured to guide the rotating and advancing mixed gas flow in direction of the longitudinal axis as a mixed exhaust gas flow; and
a substrate being positioned within the interior of the housing downstream to the mixer arrangement, wherein the mixed exhaust gas flow being configured to flow through the substrate, **characterized in that**
the reactant inlet is configured to dispense reactant in second direction of a crosswise axis perpendicular to the longitudinal axis, the second direction being opposite to the first direction.

2. The apparatus of claim 1, wherein the exhaust inlet being positioned at an end portion of the first housing end, the inlet having a central axis parallel to the longitudinal axis of the housing, the exhaust gas flow being configured to flow in direction of the longitudinal axis between the exhaust inlet and the mixer arrangement and through the substrate.

3. The apparatus of claim 1, further comprising a first substrate positioned within the interior of the housing downstream to the exhaust inlet, wherein the exhaust gas flow being configured to flow through the first substrate in direction of the longitudinal axis, and wherein the substrate comprises a second positioned within the interior of the housing downstream to the mixer arrangement, wherein the mixed exhaust gas flow being configured to flow through the second substrate in direction of the longitudinal axis.

4. The apparatus of claim 3, wherein the first substrate comprises at least one of the following: a diesel oxidation catalyst (DOC) substrate; and a diesel particulate filter (DPF), and the second substrate comprises at least one of the following: a selective catalytic reduction (SCR) substrate; and a diesel particulate filter (DPF).

5. The apparatus of any of claims 1 to 4, further comprising flow distribution arrangement positioned within the interior of the housing downstream to the mixer arrangement, the flow distribution arrangement comprising:
a first flow distribution element extending across the mixed exhaust gas flow as an U-shape first plate configured to divide the mixed exhaust gas flow to two sub flows exiting the first flow distribution element from opposite ends of the U-shape first plate within the interior of the housing;
a second flow distribution element, downstream to the first flow distribution element, extending across the interior of the housing at least partially as a concave or a conical second plate, at least two openings defined by the second plate extending radially outwardly from a central portion of the second plate, the openings increase in size as extending radially away from the central portion of the second plate, wherein each sub flow is allowed to flow within the interior of the housing above upstream surface of the second plate, a tubular inner surface of the housing configured to divide each sub flow to two radial sub flows, wherein the further two sub flows advancing radially in opposite directions to meet and mix with corresponding two radial sub flows originating from another sub flow and to enter the openings towards the second substrate as a distributed gas flow in direction of the longitudinal axis.

6. The apparatus of claim 1, wherein
the first flow guide arrangement comprises:
at least one elongated blade extending across a first part of the interior of the housing to guide the exhaust gas flow in direction of the longitudinal axis to a second part of the interior of the housing, the first part located above the second part;
at least one curved blade located in the second part of the interior of the housing to guide the exhaust gas flow to rotating and advancing movement in direction of a crosswise axis perpendicular to the longitudinal axis; and
a second surface of a block blade facing the second part of the interior of the housing preventing the rotating and advancing exhaust gas flow to access the first part of the interior of the housing;
a non-perforated tubular element allowing the rotating and advancing exhaust gas flow to enter a second open end of an interior of the non-perforated tubular element in the first direction of a crosswise axis perpendicular to the longitudinal axis;
the second flow guide arrangement comprises:
a cup-shaped cylindrical element, wherein an inner diameter of the cup-shaped cylindrical element is greater than an outer diameter of a first open end of the non-perforated tubular element, wherein side wall of the cup-shaped cylindrical element extends to direction of a crosswise axis and overlapping a portion of side wall of the non-perforated tubular element; and
a first surface of the block blade facing the cup-shaped cylindrical element and guiding the exhaust gas flow to direction of the longitudinal axis; and
the reactant inlet arranged to a closed base of the cup-shape cylindrical element and configured to dispense a reactant into the interior of the cup-shape cylindrical element in second direction opposite to the first direction of the crosswise axis towards the first open end of the non-perforated tubular element.

7. The apparatus of claim 1, wherein
the first flow guide arrangement comprises:
at least one elongated blade extending across a first part of the interior of the housing to guide the exhaust gas flow in direction of the longitudinal axis to a second part of the interior of the housing, the first part located above the second part;
at least one curved blade located in the second part of the interior of the housing to guide the exhaust gas flow to rotating and advancing movement in direction of a crosswise axis perpendicular to the longitudinal axis;
a second surface of a block blade facing the second part of the interior of the housing preventing the rotating and advancing exhaust gas flow to access the first part of the interior of the housing; and
a tubular element arranged in direction of cross-axis allowing the rotating and advancing exhaust gas flow to enter an interior of the perforated tubular through openings located within a second portion of the tubular element exposed to the second part of the interior of the housing, whereas a first portion of the tubular element exposed to the first part of the interior of the housing is non-perforated;
the second flow guide arrangement comprising:
a cup-shaped cylindrical element, wherein an inner diameter of the cup-shaped cylindrical element is greater than an outer diameter of an open end of the first portion of the tubular element, wherein side wall of the cup-shaped cylindrical element extends to direction of a crosswise axis and overlapping a portion of side wall of the first portion of the tubular element; and
a first surface of the block blade facing the cup-shaped cylindrical element and guiding the exhaust gas flow to direction of the longitudinal axis; and
the reactant inlet arranged to a closed base of the cup-shaped cylindrical element and configured to dispense a reactant into the interior of the cup-shaped cylindrical element in second direction opposite to the first direction of the crosswise axis towards the open end of the tubular element.

8. The apparatus of claim 7, wherein a peripheral surface of the tubular element comprises openings and fins corresponding to the openings to guide exhaust gas flow to flow through the openings into the tubular element.

9. The apparatus of claim 6, wherein the first flow guide arrangement further comprises an elongated pole member extending in direction of a crosswise axis and located in the second part of the interior of the housing, outer diameter of the elongated cylindrical pole member being smaller than inner diameter of the non-perforated tubular element, a first end of the elongated pole member extending partially inside the non-perforated tubular element and a second end of the elongated pole member attached to an internal surface of the housing within the second part of the interior of the housing.

10. A combustion engine comprising an apparatus for aftertreatment of exhaust gas of any of claims 1 to 9.

## Patentansprüche

1. Vorrichtung zur Nachbehandlung von Abgas, umfassend:
ein Gehäuse mit einer Längsachse, die sich zwischen einem ersten Ende und einem zweiten Ende des Gehäuses erstreckt;
einen Abgaseinlass, der angeordnet ist an einem Abschnitt des ersten Endes des Gehäuses zum Eintreten von Abgasstrom in das Innere des Gehäuses;
eine Mischeranordnung, die positioniert ist innerhalb des Inneren des Gehäuses stromabwärts zu dem Abgaseinlass und umfasst:
eine erste Strömungsführungsanordnung, die konfiguriert ist, den Abgasstrom zu rotierendem und vorschiebendem Gasstrom zu führen in einer ersten Richtung einer Querachse senkrecht zu der Längsachse;
einen Reaktanteinlass zum Abgeben Reaktants an den rotierenden und vorschiebenden Gasstrom, wobei der Reaktant konfiguriert ist, sich mit dem Abgas zu mischen; und
eine zweite Strömungsführungsanordnung, die konfiguriert ist, den rotierenden und vorschiebenden gemischten Gasstrom zu führen in Richtung der Längsachse als ein gemischter Abgasstrom; und
ein Substrat, das positioniert ist innerhalb des Inneren des Gehäuses stromabwärts zu der Mischeranordnung, wobei der gemischte Abgasstrom konfiguriert ist, durch das Substrat zu strömen, **gekennzeichnet dadurch, dass**
der Reaktanteinlass konfiguriert ist, Reaktant abzugeben in zweiter Richtung einer Querachse senkrecht zu der Längsachse, wobei die zweite Richtung entgegengesetzt zu der ersten Richtung ist.

2. Vorrichtung nach Anspruch 1, wobei der Abgaseinlass positioniert ist an einem Endabschnitt des ersten Gehäuseendes, wobei der Einlass eine Mittelachse parallel zu der Längsachse des Gehäuses aufweist, wobei der Abgasstrom konfiguriert ist, in Richtung der Längsachse zu strömen zwischen dem Abgaseinlass und der Mischeranordnung und durch das Substrat.

3. Vorrichtung nach Anspruch 1, ferner umfassend ein erstes Substrat, das positioniert ist innerhalb des Inneren des Gehäuses stromabwärts zu dem Abgaseinlass, wobei der Abgasstrom konfiguriert ist, durch das erste Substrat in Richtung der Längsachse zu strömen, und wobei das Substrat umfasst ein Zweites, das positioniert ist innerhalb des Inneren des Gehäuses stromabwärts zu der Mischeranordnung, wobei der gemischte Abgasstrom konfiguriert ist, durch das zweite Substrat in Richtung der Längsachse zu strömen.

4. Vorrichtung nach Anspruch 3, wobei das erste Substrat umfasst wenigstens eines der Folgenden: ein Diesel-Oxidations-Katalysator (DOC) -Substrat; und einen Dieselpartikelfilter (DPF), und wobei das zweite Substrat umfasst wenigstens eines der Folgenden: ein selektives katalytisches Reduktions (SCR) -substrat; und einen Dieselpartikelfilter (DPF).

5. Vorrichtung nach einem der Ansprüche 1 bis 4, ferner umfassend Strömungsverteilungsanordnung, die positioniert ist innerhalb des Inneren des Gehäuses stromabwärts zu der Mischeranordnung, wobei die Strömungsverteilungsanordnung umfasst:
ein erstes Strömungsverteilungselement, das sich erstreckt über den gemischten Abgasstrom als eine U-förmige erste Platte, die konfiguriert ist, den gemischten Abgasstrom zu teilen in zwei Teilströme, die austreten aus dem ersten Strömungsverteilungselement von entgegengesetzten Enden der U-förmigen ersten Platte innerhalb des Inneren des Gehäuses;
ein zweites Strömungsverteilungselement, stromabwärts zu dem ersten Strömungsverteilungselement, das sich erstreckt über das Innere des Gehäuses zumindest teilweise als eine konkave oder eine konische zweite Platte, wobei sich wenigstens zwei Öffnungen, definiert durch die zweite Platte, radial nach außen erstrecken von einem Mittelabschnitt der zweiten Platte, wobei die Öffnungen an Größe zunehmen, während sie sich radial weg von dem Mittelabschnitt der zweiten Platte erstrecken, wobei jeder Teilstrom strömen darf innerhalb des Inneren des Gehäuses über stromaufwärtige Fläche der zweiten Platte, eine röhrenförmige innere Fläche des Gehäuses, konfiguriert, um jeden Teilstrom in zwei radiale Teilströme zu teilen, wobei die weiteren zwei Teilströme vorschieben radial in entgegengesetzte Richtungen, um sich mit entsprechenden zwei radialen Teilströmen zu treffen und zu mischen, die von einem anderen Teilstrom stammen, und um einzutreten in die Öffnungen in Richtung des zweiten Substrats als ein verteilter Gasstrom in Richtung der Längsachse.

6. Vorrichtung nach Anspruch 1, wobei die erste Strömungsführungsanordnung umfasst:
wenigstens ein längliches Blatt, das sich über einen ersten Teil des Inneren des Gehäuses erstreckt, um zu führen den Abgasstrom in Richtung der Längsachse zu einem zweiten Teil des Inneren des Gehäuses, wobei sich der erste Teil über dem zweiten Teil befindet;
wenigstens ein gekrümmtes Blatt, das sich in dem zweiten Teil des Inneren des Gehäuses befindet, um den Abgasstrom zu rotierender und vorschiebender Bewegung zu führen in Richtung einer Querachse senkrecht zur Längsachse; und
eine zweite Fläche eines Blockblatts, die dem zweiten Teil des Inneren des Gehäuses zugewandt ist und verhindert, dass der rotierende und vorschiebende Abgasstrom Zugang bekommt zu dem ersten Teil des Inneren des Gehäuses;
ein nicht-perforiertes röhrenförmiges Element, das dem rotierenden und vorschiebenden Abgasstrom ermöglicht, einzutreten in ein zweites offenes Ende eines Inneren des nicht-perforierten röhrenförmigen Elements in der ersten Richtung einer Querachse senkrecht zu der Längsachse;
wobei die zweite Strömungsführungsanordnung umfasst:
ein schalenförmiges zylindrisches Element, wobei ein innerer Durchmesser des schalenförmigen zylindrischen Elements größer ist als ein äußerer Durchmesser eines ersten offenen Endes des nicht-perforierten röhrenförmigen Elements,
wobei sich Seitenwand des schalenförmigen zylindrischen Elements erstreckt in Richtung einer Querachse und überlappt einen Abschnitt Seitenwand des nicht-perforierten röhrenförmigen Elements; und
eine erste Fläche des Blockblatts, die dem schalenförmigen zylindrischen Element zugewandt ist und den Abgasstrom führt in Richtung der Längsachse; und
den Reaktanteinlass, der angeordnet ist an einer geschlossenen Basis des schalenförmigen zylindrischen Elements, und konfiguriert ist, einen Reaktant abzugeben in das Innere des schalenförmigen zylindrischen Elements in zweiter Richtung entgegengesetzt zu der ersten Richtung der Querachse in Richtung des ersten offenen Endes des nicht-perforierten röhrenförmigen Elements.

7. Vorrichtung nach Anspruch 1, wobei die erste Strömungsführungsanordnung umfasst:
wenigstens ein längliches Blatt, das sich über einen ersten Teil des Inneren des Gehäuses erstreckt, um zu führen den Abgasstrom in Richtung der Längsachse zu einem zweiten Teil des Inneren des Gehäuses, wobei sich der erste Teil über dem zweiten Teil befindet;
wenigstens ein gekrümmtes Blatt, das sich in dem zweiten Teil des Inneren des Gehäuses befindet, um den Abgasstrom zu rotierender und vorschiebender Bewegung zu führen in Richtung einer Querachse senkrecht zur Längsachse;
eine zweite Fläche eines Blockblatts, die dem zweiten Teil des Inneren des Gehäuses zugewandt ist und verhindert, dass der rotierende und vorschiebende Abgasstrom Zugang bekommt zu dem ersten Teil des Inneren des Gehäuses; und
ein röhrenförmiges Element, das angeordnet ist in Richtung der Querachse, das dem rotierenden und vorschiebenden Abgasstrom ermöglicht, einzutreten in ein Inneres des perforierten Röhrenförmigen durch Öffnungen, die sich befinden innerhalb eines zweiten Abschnitts des röhrenförmigen Elements, ausgesetzt dem zweiten Teil des Inneren des Gehäuses, wohingegen ein erster Abschnitt des röhrenförmigen Elements, ausgesetzt dem ersten Teil des Inneren des Gehäuses, nicht-perforiert ist;
wobei die zweite Strömungsführungsanordnung umfasst:
ein schalenförmiges zylindrisches Element, wobei ein innerer Durchmesser des schalenförmigen zylindrischen Elements größer ist als ein äußerer Durchmesser eines offenen Endes des ersten Abschnitts des röhrenförmigen Elements, wobei sich Seitenwand des schalenförmigen zylindrischen Elements erstreckt in Richtung einer Querachse und überlappt einen Abschnitt Seitenwand des ersten Abschnitts des röhrenförmigen Elements; und
eine erste Fläche des Blockblatts, die dem schalenförmigen zylindrischen Element zugewandt ist und den Abgasstrom führt in Richtung der Längsachse; und
den Reaktanteinlass, der angeordnet ist an einer geschlossenen Basis des schalenförmigen zylindrischen Elements, und konfiguriert ist, einen Reaktant abzugeben in das Innere des schalenförmigen zylindrischen Elements in zweiter Richtung entgegengesetzt zu der ersten Richtung der Querachse in Richtung des offenen Endes des röhrenförmigen Elements.

8. Vorrichtung nach Anspruch 7, wobei eine Umfangsfläche des röhrenförmigen Elements umfasst Öffnungen und Rippen entsprechend zu den Öffnungen, um Abgasstrom zu führen, um durch die Öffnungen in das röhrenförmige Element zu strömen.

9. Vorrichtung nach Anspruch 6, wobei die erste Strömungsführungsanordnung ferner umfasst ein längliches Schaftelement, das sich in Richtung einer Querachse erstreckt und sich in dem zweiten Teil des Inneren des Gehäuses befindet, wobei der äußere Durchmesser des länglichen zylindrischen Schaftelements kleiner ist als innerer Durchmesser des nicht-perforierten röhrenförmigen Elements, wobei sich ein erstes Ende des länglichen Schaftelements erstreckt teilweise innerhalb des nicht perforierten röhrenförmigen Elements und ein zweites Ende des länglichen Schaftelements angebracht ist an einer inneren Fläche des Gehäuses innerhalb des zweiten Teils des Inneren des Gehäuses.

10. Verbrennungsmotor, umfassend eine Vorrichtung zur Nachbehandlung von Abgas nach einem der Ansprüche 1 bis 9.

## Revendications

1. Un appareil de post-traitement de gaz d'échappement comprenant :
un boîtier ayant un axe longitudinal qui s'étend entre une première extrémité et une deuxième extrémité du boîtier ;
une entrée d'échappement étant positionnée au niveau d'une partie de la première extrémité du boîtier pour introduire un flux de gaz d'échappement à l'intérieur du boîtier ;
un agencement de mélangeur positionné à l'intérieur du boîtier en aval de l'entrée d'échappement et comprenant :
un premier agencement de guidage de flux configuré pour guider le flux de gaz d'échappement vers un flux de gaz tournant et progressant dans une première direction d'un axe transversal perpendiculaire à l'axe longitudinal ;
une entrée de réactif pour distribuer un réactif au flux de gaz en rotation et en progression, le réactif étant configuré pour se mélanger avec les gaz d'échappement ; et
un deuxième agencement de guidage de flux configuré pour guider, en direction de l'axe longitudinal, en tant qu'un flux de gaz d'échappement mélangé, le flux de gaz mélangé tournant et avançant ; et
un substrat étant positionné à l'intérieur du boîtier en aval de l'agencement de mélangeur, le flux de gaz d'échappement mélangé étant configuré pour s'écouler à travers le substrat, **caractérisé en ce que**
l'entrée de réactif est configurée pour distribuer le réactif dans une deuxième direction d'un axe transversal perpendiculaire à l'axe longitudinal, la deuxième direction étant opposée à la première direction.

2. L'appareil selon la revendication 1, dans lequel l'entrée d'échappement est positionnée au niveau d'une partie d'extrémité de la première extrémité du boîtier, l'entrée ayant un axe central parallèle à l'axe longitudinal du boîtier, le flux de gaz d'échappement étant configuré pour s'écouler dans la direction de l'axe longitudinal entre l'entrée d'échappement et l'agencement de mélangeur, et à travers le substrat.

3. L'appareil selon la revendication 1, comprenant en outre un premier substrat positionné à l'intérieur du boîtier en aval de l'entrée d'échappement, le flux de gaz d'échappement étant configuré pour s'écouler à travers le premier substrat en direction de l'axe longitudinal, et le substrat comprenant un deuxième substrat positionné à l'intérieur du boîtier en aval de l'agencement de mélangeur, le flux de gaz d'échappement mélangé étant configuré pour s'écouler à travers le deuxième substrat en direction de l'axe longitudinal.

4. L'appareil selon la revendication 3, dans lequel le premier substrat comprend au moins un parmi ce qui suit : un substrat de catalyseur d'oxydation diesel (DOC) ; et un filtre à particules diesel (DPF), et le deuxième substrat comprend au moins un parmi ce qui suit : un substrat de réduction catalytique sélective (SCR) ; et un filtre à particules diesel (DPF).

5. L'appareil selon l'une quelconque des revendications 1 à 4, comprenant en outre un agencement de distribution de flux positionné à l'intérieur du boîtier en aval de l'agencement de mélangeur, l'agencement de distribution de flux comprenant :
un premier élément de distribution de flux s'étendant à travers le flux de gaz d'échappement mélangé en tant que première plaque en forme de U configurée pour diviser le flux de gaz d'échappement mélangé en deux sous-flux sortant du premier élément de distribution de flux à partir d'extrémités opposées de la première plaque en forme de U à l'intérieur du logement ;
un deuxième élément de distribution de flux, en aval du premier élément de distribution de flux, s'étendant à travers l'intérieur du boîtier au moins partiellement sous la forme d'une deuxième plaque concave ou conique, au moins deux ouvertures définies par la deuxième plaque s'étendant radialement vers l'extérieur à partir d'une partie centrale de la deuxième plaque, les ouvertures augmentant en taille au fur et à mesure qu'elles s'étendent radialement en s'éloignant de la partie centrale de la deuxième plaque, chaque sous-flux étant apte à s'écouler à l'intérieur du boîtier au-dessus d'une surface amont de la deuxième plaque, une surface intérieure tubulaire du boîtier étant configurée pour diviser chaque sous-flux en deux sous-flux radiaux, les deux autres sous-flux avançant radialement dans des directions opposées pour se rencontrer et se mélanger avec deux sous-flux radiaux correspondants provenant d'un autre sous-flux et pour entrer dans les ouvertures vers le deuxième substrat en tant qu'un flux de gaz distribué en direction de l'axe longitudinal.

6. L'appareil selon la revendication 1, dans lequel
le premier agencement de guidage de flux comprend :
au moins une lame allongée s'étendant sur une première partie de l'intérieur du boîtier pour guider le flux de gaz d'échappement en direction de l'axe longitudinal vers une deuxième partie de l'intérieur du boîtier, la première partie étant située au-dessus de la deuxième partie ;
au moins une lame incurvée située dans la deuxième partie de l'intérieur du boîtier pour guider le flux de gaz d'échappement vers un mouvement de rotation et de progression dans la direction d'un axe transversal perpendiculaire à l'axe longitudinal ; et
une deuxième surface d'une lame de bloc tournée vers la deuxième partie de l'intérieur du boîtier empêchant le flux de gaz d'échappement tournant et en progression d'accéder à la première partie de l'intérieur du boîtier ;
un élément tubulaire non perforé permettant au flux de gaz d'échappement tournant et en progression d'entrer dans une deuxième extrémité ouverte d'un intérieur de l'élément tubulaire non perforé dans la première direction d'un axe transversal perpendiculaire à l'axe longitudinal ;
le deuxième agencement de guidage de flux comprend :
un élément cylindrique en forme de coupelle, un diamètre intérieur de l'élément cylindrique en forme de coupelle étant supérieur à un diamètre extérieur d'une première extrémité ouverte de l'élément tubulaire non perforé, une paroi latérale de l'élément cylindrique en forme de coupelle s'étendant dans la direction d'un axe transversal et chevauchant une partie de la paroi latérale de l'élément tubulaire non perforé ; et
une première surface de la lame de bloc tournée vers l'élément cylindrique en forme de coupelle et guidant le flux de gaz d'échappement vers la direction de l'axe longitudinal ; et
l'entrée de réactif disposée sur une base fermée de l'élément cylindrique en forme de coupelle et configurée pour distribuer un réactif à l'intérieur de l'élément cylindrique en forme de coupelle dans une deuxième direction opposée à la première direction de l'axe transversal vers la première extrémité ouverte de l'élément tubulaire non perforé.

7. L'appareil selon la revendication 1, dans lequel
le premier agencement de guidage de flux comprend :
au moins une lame allongée s'étendant sur une première partie de l'intérieur du boîtier pour guider le flux de gaz d'échappement en direction de l'axe longitudinal vers une deuxième partie de l'intérieur du boîtier, la première partie étant située au-dessus de la deuxième partie ;
au moins une lame incurvée située dans la deuxième partie de l'intérieur du boîtier pour guider le flux de gaz d'échappement vers un mouvement de rotation et de progression dans la direction d'un axe transversal perpendiculaire à l'axe longitudinal ;
une deuxième surface d'une lame de bloc tournée vers la deuxième partie de l'intérieur du boîtier empêchant le flux de gaz d'échappement tournant et progressant d'accéder à la première partie de l'intérieur du boîtier ; et
un élément tubulaire disposé dans le sens de l'axe transversal permettant au flux de gaz d'échappement tournant et en progression de pénétrer à l'intérieur de l'élément tubulaire perforé à travers des ouvertures situées à l'intérieur d'une deuxième partie de l'élément tubulaire exposée à la deuxième partie de l'intérieur du boîtier, tandis qu'une première partie de l'élément tubulaire exposée à la première partie de l'intérieur du boîtier n'est pas perforée ;
le deuxième agencement de guidage de flux comprenant :
un élément cylindrique en forme de coupelle, un diamètre intérieur de l'élément cylindrique en forme de coupelle étant supérieur à un diamètre extérieur d'une extrémité ouverte de la première partie de l'élément tubulaire, une paroi latérale de l'élément cylindrique en forme de coupelle s'étendant dans la direction d'un axe transversal et chevauchant une partie d'une paroi latérale de la première partie de l'élément tubulaire ; et
une première surface de la lame de bloc tournée vers l'élément cylindrique en forme de coupelle et guidant le flux de gaz d'échappement vers la direction de l'axe longitudinal ; et
l'entrée de réactif étant disposée sur une base fermée de l'élément cylindrique en forme de coupelle et étant configurée pour distribuer un réactif dans l'intérieur de l'élément cylindrique en forme de coupelle dans la deuxième direction opposée à la première direction de l'axe transversal vers l'extrémité ouverte de l'élément tubulaire.

8. L'appareil selon la revendication 7, dans lequel une surface périphérique de l'élément tubulaire comprend des ouvertures et des ailettes correspondant aux ouvertures pour guider le flux de gaz d'échappement de façon qu'il s'écoule à travers les ouvertures jusque dans l'élément tubulaire.

9. L'appareil selon la revendication 6, dans lequel le premier agencement de guidage de flux comprend en outre un élément formant montant allongé s'étendant en direction d'un axe transversal et situé dans la deuxième partie de l'intérieur du boîtier, un diamètre extérieur de l'élément formant montant cylindrique allongé étant plus petit que le diamètre intérieur de l'élément tubulaire non perforé, une première extrémité de l'élément formant montant allongé s'étendant partiellement à l'intérieur de l'élément tubulaire non perforé et une deuxième extrémité de l'élément formant montant allongé étant fixée à une surface interne du boîtier dans la deuxième partie de l'intérieur du boîtier.

10. Un moteur à combustion comprenant un appareil de post-traitement de gaz d'échappement selon l'une quelconque des revendications 1 à 9.
